**Europäisches Patentamt**

**European Patent Office**

**Office européen des brevets**

(11) Veröffentlichungsnummer: **0 410 038 A1**

## (12) EUROPÄISCHE PATENTANMELDUNG

(21) Anmeldenummer: **89113872.9**

(22) Anmeldetag: **27.07.89**

(51) Int. Cl.5: **B23K 26/00, B23K 26/02**

(43) Veröffentlichungstag der Anmeldung:
**30.01.91 Patentblatt 91/05**

(84) Benannte Vertragsstaaten:
**CH DE ES FR GB IT LI SE**

(71) Anmelder: **HMT HIGH MEDICAL TECHNOLOGIES VERTRIEBS- UND ENTWICKLUNGS AG**

**Oberaach(CH)**

(72) Erfinder: **Uebelacker, Walter**
**Georgenstrasse 48**
**D-8000 München 40(DE)**

(74) Vertreter: **Rost, Jürgen**
**Patent- und Rechtsanwälte**
**Bardehle-Pagenberg-Dost-Altenburg**
**Frohwitter-Geissler & Partner Galileiplatz 1z**
**1**
**D-8000 München 80(DE)**

(54) **Verfahren und Vorrichtung zur Bearbeitung von festen Massen.**

(57) Es wird ein Verfahren und eine Vorrichtung zur Bearbeitung von aus anorganischen und/oder organischen Substanzen gebildeten festen Massen, beispielsweise Gips, durch zertrümmernde Wegnahme nicht gewünschter Bereiche vorgeschlagen, wobei von einer Festkörperlaseranodnung Laserlichtpulse einer bestimmten Wellenlänge und Pulsbreite mit einer Pulsenergie von bis zu 80 mJ emittiert und über eine plankenvexe Linse focussiert werden. Danach werden sie in eine optische Quarzglasfaser eingeleitet und über diese zu dem zu zertrümmernden Bereich Masse weitergeleitet, wo die Laserenergie ein Plasma an der Oberfläche bildet, von dem sich die unmittelbar umliegenden Massenbereiche zerstörende Stoßwellen ausbreiten.

## VERFAHREN UND VORRICHTUNG ZUR BEARBEITUNG VON FESTEN MASSEN

Die Erfindung betrifft ein Verfahren und eine Vorrichtung zur Bearbeitung von aus anorganischen und/oder organischen Substanzen gebildeten festen Massen, beispielsweise Gips durch zertrümmernde Wegnahme nicht gewünschter Bereiche.

Es besteht häufig die Notwendigkeit, Gebilde aus Gips formgebend zu bearbeiten. Dabei ist oft eine hohe Präzision erforderlich. Besondere Schwierigkeiten bereitet die Bearbeitung schwer zugänglicher Stellen mit der notwendigen Präzision. Dies ist beispielsweise bei der Herstellung von Gußschmuckmodellen und bei der Bearbeitung von zahntechnischen Modellen der Fall.

Der Erfindung liegt die Aufgabe zugrunde, ein Verfahren und eine Vorrichtung zu schaffen, mit denen eine präzise Bearbeitung von aus anorganischen und/oder organischen Substanzen gebildeten festen Massen, beispielsweise Gips, durch zertrümmernde Wegnahme nicht gewünschter Bereiche an schwer zugänglichen Stellen möglich ist.

Diese Aufgabe wird bezüglich des erfindungsgemäßen Verfahrens dadurch gelöst, daß von einer Festkörperlaseranordnung Laserlichtpulse einer Wellenlänge von 745-755 nm und einer Pulsbreite von 350-450 ns mit einer Pulsenergie von bis zu 80 mJ emittiert, über eine plankonvexe Linse focussiert, in eine optische Quarzglasfaser eingeleitet und über diese zu dem zu zertrümmernden Bereich der festen Masse weitergeleitet werden, wo die Laserenergie ein Plasma an der Oberfläche bildet, von dem sich die unmittelbar umliegenden Massenbereiche zerstörende Stoßwellen ausbreiten.

Bezüglich der erfindungsgemäßen Vorrichtung wird die Aufgabe dadurch gelöst, daß sie eine Festkörperlaseranordnung aufweist, durch die Laserlichtpulse einer Wellenlänge von 745-755 nm und einer Pulsbreite von 350-450 ns mit einer Pulsenergie von bis zu 80 mJ emittierbar sind, wobei die Pulse durch eine plankonvexe Linse focussierbar, in eine optische Quarzglas-Faser von 250-300 $\mu$m einleitbar und über diese zu dem zu zertrümernden Bereich der festen Masse weiterleitbar sind.

Vorteile des Verfahrens und der Vorrichtung zur Durchführung des Verfahrens:

- Die Verwendung eines Alexandrit-Kristalls ermöglicht die Realisierung der erfindungsgemäßen Wirkparameter in einfacher Weise;
- Steuerbarkeit der Wirkungstiefe der Zertrümmetrung durch die Länge der emittierten Pulszüge und der Abmessung der Zertrümmerungsprodukte durch Veränderung der Pulsenergie;
- Einbaubarkeit der optischen Faser mit einer üblichen flexiblen Endoskopanordnung mit mindestens einer Beleuchtungs- und Sichtvorrichtung in ein Mutterendoskop mit einem Gesamtdurchmesser von 1,5-2,0 mm;
- kleine Abmessung der verpackten optischen Faser ermöglicht die Erreichbarkeit schwerst zugänglicher Stellen durch Öffnungen und Kanäle von 2 mm Durchmesser oder weniger;
- Formbarkeit der Pulsenergie bei im wesentlichen gegebener Pulsbreite mittels der Pumpspannung .hinsichtlich der Energiedichte, wodurch
- einerseits die Unterschreitung der Zerstörungsschwelle der Faser eingehalten werden kann
- andererseits die Wirkung der Laserenergie dosiert werden kann;
- Gefahrlosigkeit bei der Manipulation, da bei der verwendeten Wellenlänge die Absorption der Strahlung durch menschliches Gewebe ein Minimum aufweist;
- erhebliche Wirkungsgradverbesserung in Wasser oder Kochsalzlösung; Wirkungsgrade bis 85 % - 90 %
- leichte Austauschbarkeit der Faser durch Stecker/Buchsenanordnung bei einfacher Justierung;

Weitere zweckmäßige Ausgestaltungen ergeben sich aus den Unteransprüchen. Es ist hervorzuheben, daß das erfindungsgemäße Verfahren und die Vorrichtung zur Durchführung dieses Verfahrens nicht nur für die aufgeführten Anwendungsbeispiele, sondern auch für andere Anwendungen wie Steingravuren oder in situ Zertrümmerung von Konkrementen eingesetzt werden kann.

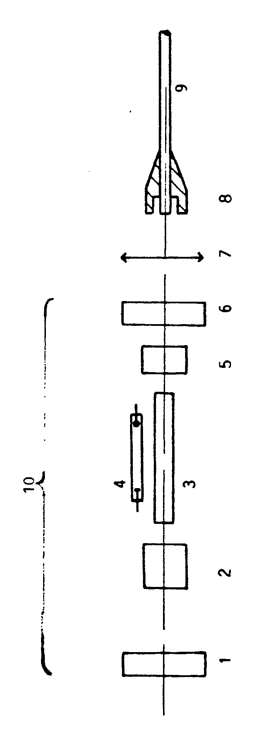

Die Erfindung wird an einem Ausführungsbeispiel an Hand der beigefügten Zeichnung näher erläutert.

In der Zeichnung ist eine Blitzlampe 4 dargestellt, die sich parallel über einen Teil der Länge eines Laserstabes 3 erstreckt. Als Stabmaterial wird vorzugsweise ein Alexandrit-Kristall verwendet. Der Laserstab 3 überragt die Bogenlänge der Blitzlampe 4 um die für die beidseitige Halterung des Stabes erforderlichen Längen und um eine zusätzliche Länge, mit der eine nachfolgend beschriebene passive Pulsverbreiterung bewirkt wird. Dies geschieht dadurch, daß von den primär angeregten $Cr^{3+}$-Atome emittierte Photonen aus dem Stabbereich der Bogenlänge der Blitzlampe bei ihrem Weg in Axialrichtung des Stabes zwischen Spiegeln 1 und 6 die primär nicht angeregten $Cr^{3+}$-Atome in der überstehenden Stablänge anregen, wodurch die lawinenartige Verstärkung der Strahlung verzögert wird, was einer Verbreiterung des Pulses entspricht. Zwischen Laserstab 3 und hochreflektierendem Spiegel 1 ist als Güteschalter eine Pockelszelle 2 angeordnet. Diese könnte in einer anderen Ausführung auch zwischen Laserstab 3 und Auskoppelspiegel 6 angeordnet sein. Die Pokkelszelle 3 wird bei maximaler Inversion geöffnet, so daß nur ein Riesenimpuls mit einer bevorzugten Grundfrequenz von 10 sec⁻¹ erzeugt wird. Zwischen Laserstab 3 und Auskoppelspiegel 6 ist ein Sicherheitsunterbrecher 5 vorgesehen, beispielsweise ein Magnetschalter, mit dem die Oszillation der Strahlung unterbrochen werden kann. Eine Einkoppellinse 7 focussiert die Strahlung auf die Apertur der optische Quarzglasfaser 9. Dabei wird zweckmäßig die Apertur so zum Focus der Einkoppellinse 7 positioniert, daß das im Strahlengang hinter dem Focus divergierende Strahlenbündel maximal dem Durchmesser der Apertur entspricht. Zur Erleichterung des Austauschs der Faser 9 ist an deren Ende ein Faserstecker 8 angebracht, der in eine (nicht dargestellte) Buchse paßt, die ein Justieren der Faser in der oben beschriebenen Einkoppelungsposition sicherstellt. Durch die Faser 9 wird die Laserstrahlung zu dem anderen Faserende fortgeleitet, das an dem zu bearbeitenden Bereich anliegt.

Dieses Faserende kann bei Einbau der Faser 9 in ein (nicht dargestelltes) Endoskop unter Lichtbeobachtung genau am zu zertrümmernden Bereich positioniert werden.

Der Laserstab 3 ist durch eine (nicht dargestellte) Kühleinrichtung kühlbar, so daß die Pulsbreite bei 25 °C auf etwa 450 ns und bei 35 °C auf etwa 350 ns einstellbar ist.

**Ansprüche**

1. Verfahren zur Bearbeitung von aus anorganischen und/oder organischen Substanzen gebildeten festen Massen, beispielsweise Gips, durch zertrümmernde Wegnahme nicht gewünschter Bereiche, dadurch gekennzeichnet, daß von einer Festkörperlaseranordnung Laserlichtpulse einer Wellenlänge von 745-755 nm und einer Pulsbreite von 350-450 ns mit einer Pulsenergie von bis zu 80 mJ emittiert, über eine plankonvexe Linse focussiert, in eine optische Quarzglasfaser eingeleitet und über diese zu dem zu zertrümmernden Bereich der festen Masse weitergeleitet werden, wo die Laserenergie ein Plasma an der Oberfläche bildet, von dem sich die unmittelbar umliegenden Massenbereiche zerstörende Stoßwellen ausbreiten.

2. Verfahren nach Anspruch 1, dadurch gekennzeichnet, daß die Wirkungstiefe der Laserstrahlung in dem zu zertrümmernden Bereich durch die Anzahl der bei einer systemspezifischen Frequenz emittierten Pulszüge gesteuert wird.

3. Verfahren nach Anspruch 1 und 2, dadurch gekennzeichnet, daß durch Reduzierung der Pulsenergie die Abmessung der Zertrümmerungsprodukte verkleinert wird.

4. Verfahren nach Anspruch 3, dadurch gekennzeichnet, daß die Pulsenergie auf kleiner 50 mJ reduziert wird.

5. Verfahren nach einem der vorhergehenden Anspruch, dadurch gekennzeichnet, daß durch Einbau der optischen Faser in ein Endoskop von ≦ 2 mm Durchmesser die Laserenergie auch durch kleinste Öffnungen und Kanäle an die zu zertrümmernden Bereiche gebracht werden.

6. Verfahren nach einem der vorhergehenden Anspruch, dadurch gekennzeichnet, daß die Energiedichte der Pulsenergie durch Änderung der Pumpspannung bei im wesentlichen gegebener, von der Stabtemperatur beeinflußbarer Pulsbreite steuerbar ist.

7. Verfahren nach einem der vorhergehenden Anspruch, dadurch gekennzeichnet, daß die Bearbeitung der zu zertrümmernden Bereiche der festen Masse unter Flüssigkeit erfolgt.

8. Verfahren nach Anspruch 7, dadurch gekennzeichnet, daß die Flüssigkeit Wasser oder eine Kochsalzlösung ist.

9. Vorrichtung zur Durchführung des Verfahrens nach Anspruch 1, dadurch gekennzeichnet, daß sie eine Festkörperlaseranordnung (10) aufweist, durch die Laserlichtpulse einer Wellenlänge von 745-755 nm und einer Pulsbreite von 350-450 ns mit einer Pulsenergie von bis zu 80 mJ emittierbar sind, wobei die Pulse durch eine plankonvexe Linse (7) focussierbar, in eine optische Quarzglas-Faser (9) von 250-300 μm einleitbar und über diese zu dem zu zertrümmernden Bereich der festen Masse weiterleitbar sind.

10. Vorrichtung nach Anspruch 9, dadurch gekennzeichnet, daß der Laserstab (3) aus einem Alexandrit-Kristall besteht.

11. Vorrichtung nach Anspruch 9 und Anspruch 10, dadurch gekennzeichnet, daß der Laserstab (3) um die für seine beiderseitige Halterung erforderliche und um eine zusätzliche Länge die Bogenlänge der Blitzlampe (4) überragt.

12. Vorrichtung nach Anspruch 9 bis 11, dadurch gekennzeichnet, daß an dem zur Laseranordnung (10) gerichteten Ende der Faser (9) ein Faserstecker (8) angebracht ist, der in eine in bestimmter Position zum Focus der Einkoppel-Linse (7) angeordnete Buchse paßt.

13. Vorrichtung nach Anspruch 9 bis 12, dadurch gekennzeichnet, daß der Laserstab (3) durch eine Kühlvorrichtung kühlbar ist.

14. Vorrichtung nach Anspruch 9 bis 13, dadurch gekennzeichnet, daß die Quarzglas-Faser (9) einen Durchmesser von 300 μm aufweist.

EP 0 410 038 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2559590 (GENERAL ELECTRIC COMPANY) <br> * Seite 3, Zeile 32 - Seite 4, Zeile 16 * <br><br> * Seite 4, Zeilen 29 - 31 * <br> * Seite 5, Zeile 16 - Seite 18 * <br> * Seite 5, Zeilen 31 - 35 * <br> * Seite 7, Zeilen 1 - 5; Figuren 1, 3 * <br> --- | 1, 9, 10, 12, 14 | B23K26/00 <br> B23K26/02 |
| A | US-A-4799755 (GENERAL ELECTRIC COMPANY) <br> * Spalte 3, Zeile 56 - Spalte 4, Zeile 4; Figur 1 * <br> --- | 1, 9 | |
| A | DE-A-3542726 (LENS PLUS CO.) <br> * Seite 11, Zeilen 16 - 18 * | 1, 7, 9, 10 | |
| A | * Seite 13, Zeilen 5 - 9 * <br> --- | | |
| A | US-A-4564737 (F.M.P.ENTERPRISE,INC.) <br> * Spalte 3, Zeilen 40 - 49 * <br> ----- | 1, 9 | |

**RECHERCHIERTE SACHGEBIETE (Int. Cl.5)**

B23K

Der vorliegende Recherchenbericht wurde für alle Patentansprüche erstellt

| Recherchenort | Abschlußdatum der Recherche | Prüfer |
|---|---|---|
| DEN HAAG | 27 MAERZ 1990 | ARAN D.D. |

EPO FORM 1503 03.82 (P0403)